Europäisches Patentamt

European Patent Office

Office européen des brevets

(11) Publication number: **0 470 670 A1**

# EUROPEAN PATENT APPLICATION

(21) Application number: **91202011.2**

(22) Date of filing: **05.08.91**

(51) Int. Cl.5: **B01D 53/14**, C01B 17/05

(30) Priority: **08.08.90 GB 9017373**

(43) Date of publication of application:
**12.02.92 Bulletin  92/07**

(84) Designated Contracting States:
**DE GB NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Bowman, David Frederick**
**Carel van Bylandtlaan 30**
**NL-2596 HR The Hague(NL)**

(54) **Removing H2S from a sour gaseous stream.**

(57) Process for the removal of $H_2S$ from a sour gaseous stream comprising contacting the sour gaseous stream in a contacting zone with an aqueous reactant solution, which reactant solution comprises Fe(III), Fe(II) and a nitrogenous organic acid chelating agent, under conditions to convert $H_2S$ into sulphur, thereby producing a gaseous stream having a reduced $H_2S$ content and a reduced aqueous solution containing solid sulphur, Fe(III), Fe(II) and a nitrogenous organic acid chelating agent;

treating reduced aqueous solution to produce a sulphur rich stream, regenerated aqueous solution and an aqueous bleed stream; recycling at least part of the regenerated aqueous solution to the contacting zone for use as aqueous reactant solution; and contacting at least part of the bleed stream with a cation exchange resin yielding an aqueous waste stream.

EP 0 470 670 A1

The presence of significant quantities of $H_2S$ in various "sour" industrial gaseous stream poses a persistent problem. The present invention relates to removing $H_2S$ from a sour gaseous stream.

In an article by H.L. Fong, D.S. Kushner and R.T. Scott, pages 54-62 of Oil & Gas Journal of 25 May, 1987, a process is described for removing $H_2S$ from a sour gaseous stream. In the known process a sour gaseous stream is contacted with an aqueous reactant solution containing Fe(III), Fe(II) and chelating agent to produce a gaseous stream having a reduced $H_2S$ content and a reduced aqueous solution containing solid sulphur, Fe(III), Fe(II) and chelating agent. The reduced aqueous solution is treated to produce a sulphur rich stream and regenerated aqueous solution. At least part of the regenerated aqueous solution is recycled to the contacting zone for use as aqueous reactant solution.

It is thought that in such process Fe(III) and $H_2S$ react to give Fe(II), S and hydrogen ions. Therefore, the reduced aqueous solution contains an increased amount of Fe(II). Treating reduced aqueous solution includes regenerating the solution. This is done by contacting with oxygen, whereby Fe(II), oxygen and hydrogen ions give Fe(III) and the by-product water. Further, a sulphur rich stream is separated from aqueous solution. In order to recover chelating agents and to improve the sulphur quality, the sulphur rich stream is usually washed with water. At least part of the water used for washing the sulphur rich stream is supplied to the reactant solution.

From the above, it is clear that water tends to accumulate in the system. Therefore, an aqueous bleed stream is to be removed from the system in order to operate the system continuously.

Further, degradation products of the chelating agents must be removed from the system. Degradation of chelating agent is a serious problem, as can be concluded from the fact that in a process in which nitrilotriaceticacid is used as chelating agent the mass ratio of intact chelating agent to oxalic acid (which is only one of the degradation products formed) in the bleed stream is about 2.

However, by removing a bleed stream a considerable amount of valuable compounds, such as intact chelating agents, is also removed. A makeup stream has to be added to compensate for both the compounds which have been degraded during the process and the valuable compounds unwantingly removed. It is an object of the present invention to reduce the loss of chelating agent.

To this end the process for the removal of $H_2S$ according to the present invention comprises:

a) contacting the sour gaseous stream in a contacting zone with an aqueous reactant solution, which reactant solution comprises Fe(III), Fe(II) and a nitrogenous organic acid chelating agent, under conditions to convert $H_2S$ into sulphur, thereby producing a gaseous stream having a reduced $H_2S$ content and a reduced aqueous solution containing solid sulphur, Fe(III), Fe(II) and a nitrogenous organic acid chelating agent,

b) treating reduced aqueous solution to produce a sulphur rich stream, regenerated aqueous solution and an aqueous bleed stream,

c) recycling at least part of the regenerated aqueous solution to the contacting zone for use as aqueous reactant solution, and

d) contacting at least part of the bleed stream with a cation exchange resin yielding an aqueous waste stream.

It was found that in addition to the cations Fe(II) and Fe(III), a cation exchange resin also absorbs nitrogenous organic acid chelating agents and ammonium ions. Therefore, contacting the bleed stream with the cation exchange resin will yield an aqueous waste stream that is notably freed from Fe(III) and Fe(II), but also from the chelating agent and ammonia. The aqueous waste stream will contain organic acids resulting from degradation of chelating agents, e.g. oxalic acid, which can easily be neutralized. Additionally the waste stream may contain sulphate and thiosulphate ions that can as well be present in the bleed stream, these products can as well easily be neutralized.

To desorb iron and chelating agent, the cation exchange resin is periodically regenerated. Suitably this is done by contacting the ion exchange resin with an acidic regeneration solution, e.g. a solution comprising sulphuric acid and/or hydrochloric acid.

Anions, e.g. sulphate and/or chloride, present in the regeneration solution after contacting with the cation exchange resin, are preferably replaced by hydroxide before the solution is recycled to the system. Therefore, the cation regeneration solution is suitably contacted with an anion exchange resin and effluent thus obtained, containing valuable compounds, is recycled to the system.

The loss of valuable compounds is less, thus the process according to the invention is more attractive.

The treating of reduced aqueous solution comprises contacting the solution with a free oxygen containing gas, separating off a sulphur rich stream and removing an aqueous bleed stream from the system. These process steps can be carried out in any sequence.

By contacting the solution with a free oxygen containing gas, e.g. air, Fe(II) compounds are oxidized. The contacting with a free oxygen containing gas is suitably carried out at a temperature in the range of from 10 to 80 $°C$, and a pressure of from 0.1 to 0.4 MPa.

Sulphur can be removed from the process by conventional means, for example, with the help of a filter.

The volume of bleed stream removed from the system per day will generally be between 0.1 and 20 % by volume of the total amount of circulating aqueous solution. The total amount of circulating aqueous solution is meant to include the aqueous solution present in the system consisting of the contacting zone and the devices required for treating the reduced aqueous solution.

The bleed stream can be removed in any process step. Suitably the bleed stream is removed from the process during removal of the sulphur rich stream from the aqueous solution. Preferably the bleed stream is removed together with water with which the sulphur rich stream is washed to recover aqueous solution - and valuable compounds - still present therein.

A cation exchange resin which is preferably used in the process according to the present invention is a strong acid cation exchange resin. A strong acid cation exchange resin is cation exchange resin which contains strong acids as functional groups. Suitably sulphonated, cross-linked polystyrene resins, such as a sulphonated copolymer of styrene and divinylbenzene, can be used.

Regeneration of the cation exchange resin is suitably carried out by treating the cation exchange resin with an acidic regeneration solution, preferably having a pH of less than 3. Suitably the acidic regeneration solution comprises sulphuric acid and/or hydrochloric acid.

Suitably, the cation exchange resin is regenerated by treating the cation exchange resin with an acidic regeneration solution to obtain loaded solution, contacting loaded solution with an anion exchange resin to obtain treated solution, and recycling treated solution to the contacting zone of step a).

The anion exchange resin suitably is a weak basic anion exchange resin, which is an anion exchange resin containing weak basic functional groups. Anion exchange resins which suitably can be used are copolymers of styrene and divinylbenzene comprising one or more polyamine functional groups chosen from the group consisting of primary amines, secondary amines and tertiary amines. Periodic regeneration of the anion exchange resin is suitably carried out by treatment with a basic regeneration solution containing hydroxide ions and having a pH above 11, suitably a solution containing sodium hydroxide and/or ammonium hydroxide. The effluent from the regeneration of the anion exchange resin contains ammina and sulphate ions which can be disposed.

The total iron content of the reactant solution may be between about 0.1 percent and about 7 percent by mass, based on the mass of the reactant solution and the iron.

In the contacting zone contacting is suitably done at a temperature which is below the melting point of sulphur. Suitable temperatures are in the range of from 10 to 80 $^\circ$C. Pressure conditions in the contacting zone may very widely. Preferably pressures of between 0.1 and 10 MPa are applied.

The aqueous reactant solution suitably has a pH between about 5 and 8.5 and the molar ratio of Fe(III) and Fe(II) is suitably between 0.2 and 6. Further, the aqueous reactant solution preferably contains thiosulphate ions and aqueous ammonia, i.e. dissolved ammonia, ammonium hydroxide and ammonium ions. The quantity of ammonia present suitably is between 0.1 and 300 percent on a molar basis with respect to the total quantity of Fe(III) and Fe(II).

Nitrogenous organic acid chelating agents which can suitably be applied in the present process are nitrilotriacetic acid, ethylenediaminetetraacetic acid and/or hydroxyethylethylenediaminetriacetic acid.

A make-up stream is added to the system in order to be able to operate the system continuously. Therefore, make-up stream will a.o. contain nitrogenous organic acid chelating agents in order to replace chelating agents which have been degraded and removed.

The present process can be applied in treating streams such as naturally occurring gases, produced and recycled $CO_2$ used in enhanced oil recovery, coal gasification streams and refinery feedstocks composed of gaseous hydrocarbon streams.

## Claims

1. Process for the removal of $H_2S$ from a sour gaseous stream comprising:

    a) contacting the sour gaseous stream in a contacting zone with an aqueous reactant solution, which reactant solution comprises Fe(III), Fe(II) and a nitrogenous organic acid chelating agent, under conditions to convert $H_2S$ into sulphur, thereby producing a gaseous stream having a reduced $H_2S$ content and a reduced aqueous solution containing solid sulphur, Fe(III), Fe(II) and a nitrogenous organic acid chelating agent,

    b) treating reduced aqueous solution to produce a sulphur rich stream, regenerated aqueous solution and an aqueous bleed stream,

    c) recycling at least part of the regenerated aqueous solution to the contacting zone for use as aqueous reactant solution, and

    d) contacting at least part of the bleed stream with a cation exchange resin yielding an aqueous waste stream.

2. Process according to claim 1, wherein the cation exchange resin is a strong acid cation exchange resin.

3. Process according to claim 2, wherein the cation exchange resin is a sulphonated copolymer of styrene and divinylbenzene.

4. Process according to any one of claims 1-3, wherein the volume of bleed stream removed from the system per day is between 0.1 and 20 % by volume of the total amount of circulating aqueous solution.

5. Process according to any one of claims 1-4, wherein the cation exchange resin is periodically regenerated by treating the cation exchange resin with an acidic regeneration solution having a pH of less than 3.

6. Process according to any one of claims 1-5, wherein the cation exchange resin is regenerated by treating the cation exchange resin with an acidic regeneration solution to obtain loaded solution, contacting loaded solution with an anion exchange resin to obtain treated solution, and recycling treated solution to the contacting zone of step a).

7. Process according to claim 6, wherein the anion exchange resin is a weak basic anion exchange resin.

8. Process according to claim 6 and/or 7, wherein the anion exchange resin is periodically regenerated by treatment with a basic regeneration solution containing hydroxide ions and having a pH above 11.

9. Process according to any one of claims 1-8, wherein the nitrogenous organic acid chelating agent is nitrilotriacetic acid, ethylenediaminetetraacetic acid and/or hydroxyethylethylenediaminetriacetic acid.

European
Patent Office

EUROPEAN SEARCH
REPORT

Application Number

EP 91 20 2011

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,P | US-A-5 006 258   (VEATCH et al.)(09-04-1991) <br> * Column 1, lines 45-52; column 2, lines 3-37; column 2, line 63 - column 3, line 30; column 7, line 44 - column 8, line 2; figures 1-3; claims 8-22 * <br> − − − | 1-3,5-9 | B 01 D 53/14 <br> C 01 B 17/05 |
| Y | US-A-4 853 192   (FONG) <br> * Column 4, lines 29-50; claims 1-18 * <br> − − − | 1-3,5-9 | |
| A | DE-A-3 444 252   (CHEMENG.) <br> * Claims 1-7 * <br> − − − | 1,9 | |
| A | EP-A-0 279 667   (DOW CHEM. CO.) <br> * Figure 1; claims 1,2,4,10-14,19 * <br> − − − | 1,9 | |
| A | EP-A-0 257 124   (ARI TECHN. INC.) <br> * Page 5, line 52 - page 6, line 4; page 6, lines 22-29; claims 1-11 * <br> − − − | 1,9 | |
| A | WO-A-9 001 984   (DOW CHEM. CO.) <br> * Page 2, lines 4-11; page 4, lines 6-11; claims 1,3,5,6 * <br> − − − − − | 1,3,9 | |

TECHNICAL FIELDS
SEARCHED (Int. Cl.5)

B 01 D
C 01 B

The present search report has been drawn up for all claims

| Place of search | Date of completion of search | Examiner |
|---|---|---|
| The Hague | 07 November 91 | EIJKENBOOM A.F. |